# EUROPÄISCHE PATENTSCHRIFT

(11) **EP 3 339 223 B1**
(45) Veröffentlichungstag und Bekanntmachung des Hinweises auf die Patenterteilung: **04.03.2020**
(21) Anmeldenummer: 17208304.0
(22) Anmeldetag: 19.12.2017
(51) Int. Cl.: B65G 49/06, C03B 33/03

(54) **ERGONOMISCH EINSTELLBARER ARBEITSPLATZ MIT KUGELROLLEN**
ERGONOMIC ADJUSTABLE WORKPLACE WITH BALLS
POSTE DE TRAVAIL RÉGLABLE ERGONOMIQUE AVEC DES BILLES

(30) Priorität: 22.12.2016 DE 102016125492
(43) Veröffentlichungstag der Anmeldung: 27.06.2018
(73) Patentinhaber: Mehltretter, J. Michael, 82049 Pullach (DE)
(72) Erfinder: Mehltretter, J. Michael, 82049 Pullach (DE)
(74) Vertreter: Lohr, Jöstingmeier & Partner

(56) Entgegenhaltungen:
- US-A- 3 788 533
- US-A- 3 790 003

## Beschreibung

### Technisches Gebiet

Die Erfindung betrifft einen ergonomisch einstellbaren Arbeitsplatz mit einem absenkbaren Kugeltisch zur freien Positionierung von Gegenständen auf der Arbeits- oder Montageplatte.

### Stand der Technik

Die EP 0 385 261 A1 offenbart einen Arbeitstisch zur manuellen Verschiebung von Paletten. Zur Reduzierung der Rollreibung weist der Arbeitstisch entweder Kugelrollelemente oder mit Luftdruck arbeitende Hebeeinrichtungen auf.

Die US 8,011,307 B2 offenbart einziehbare Lagervorrichtung bestehend aus Kugeln, welche in standardisierten Vertiefungen einer Arbeitsfläche untergebracht sind. Jede Kugel ist separat in einem Gehäuse gelagert. Das Lager besteht aus einem Bett aus kleinen Kugeln. Die Lagerführung ist durch eine Feder gebildet. Durch die Feder werden die Kugeln in eine Arbeitsposition gedrückt, sodass diese aus der Arbeitsplatte vorstehen und eine Last tragen können.

Die US 3 790 009 offenbart einen Schwenktisch für den Glaszuschnitt. Die Glasplatten werden zur Bearbeitung auf Rollen positioniert, welche über eine Schwenkmechanik angehoben werden können. Der Schwenkmechanismus kann hierbei über einen Sicherungsstift gesichert werden, damit ein unkontrolliertes Absenken von der oberen in die untere Position verhindert wird.

Die US 3 788 533 A offenbart einen Schwenktisch für den Glaszuschnitt. Die Glasplatten werden zur Bearbeitung auf Rollen positioniert, welche über einen Schwenkhebel angehoben werden können.

### Darstellung der Erfindung

Der Erfindung liegt die Aufgabe zugrunde, einen ergonomisch einstellbaren Arbeitsplatz zu gestalten. Der Arbeitsplatz soll einstellbar und an individuelle Bedürfnisse zum Transport und zur Positionierung von Transportgütern anpassbar sein.

Diese Aufgabe wird durch eine Vorrichtung nach Anspruch 1 gelöst. Vorteilhafte Ausgestaltungen der Erfindung sind in den Unteransprüchen angegeben.

Die Lösung der Aufgabe erfolgt durch eine Mehrzahl von in der Arbeitsplatte eines Arbeitsplatzes integrierten und versenkbaren Kugelrollen. Die Arbeitsplatte hat eine Oberseite, auf welcher üblicherweise Werkstücke bearbeitet oder transportiert werden und eine Unterseite gegenüber der Oberseite. Zusätzlich hat die Arbeitsplatte eine Vorderseite an welcher eine Person, wie beispielsweise ein Nutzer sitzt. Die Arbeitsplatte hat noch eine Rückseite gegenüber der Vorderseite. Die Kugelrollen können über einen Handhebel oder eines anderen Betätigungselements mithilfe einer Exzentermechanik in die Oberseite versenkbar sein. Zusätzlich kann die Exzentermechanik mindestens einen Rollenträger auf welchem die Kugelrollen angeordnet sein können umfassen. Alternativ kann die Exzentermechanik über ein Betätigungselement wie eine Pneumatik eine, Hydraulik oder ein elektromechanischer Antrieb betätigt werden. Die Exzentermechanik ist vorzugsweise an der Unterseite der Arbeitsplatte angeordnet.

Die Position der Kugelrollen kann über den bevorzugten Handhebel oder das Betätigungselement zwischen wenigstens einer oberen Position und einer unteren Position verstellt werden. Bevorzugt rastet der Handhebel oder das Betätigungselement in diesen Positionen ein oder hat einen Anschlag. In der oberen Position ragen die Kugelrollen aus der Oberfläche auf der Oberseite der Arbeitsplatte heraus, sodass ein auf der Arbeitsplatte befindliches Werkstück über die Kugelrollen beweglich gelagert ist. In der unteren Position der Kugelrollen, befinden sich diese unterhalb der Oberfläche der Arbeitsplatte, sodass ein auf der Arbeitsplatte befindliches Werkstück auf der Arbeitsplatte aufliegt und beispielsweise bearbeitet oder verpackt werden kann. Das Werkstück kann durch eine Schwenkbewegung des Handhebels oder des Betätigungselements durch die Kugelrollen angehoben bzw. abgesenkt werden. Alternativ giobt es wenigstens eine dritte Position des Handhebels oder des Betätigungselements. In dieser dritten Position nehmen bestimmte Rollen eine höhere Position ein als die übrigen Rollen. So können beispielsweise die Rollen an der Vorderseite der Arbeitsplatte etwas weiter aus der Arbeitsplatte herausstehen. Damit würde ein Gegenstand leicht von der Vorderseite auf die Arbeitsplatte gleiten. Dies vereinfacht die Bestückung der Arbeitsplatte mit einem zu bearbeitenden Objekt. Gleichzeitig wird ein Abgleiten von der Arbeitsplatte verhindert. Damit ergibt sich eine Verbesserung der Arbeitssicherheit.

Der Handhebel oder das Betätigungselement ist bevorzugt über mindestens eine Verbindungswelle mit mindestens einer Steuerscheibe verbunden. Die Steuerscheibe ist auf der Verbindungswelle angeordnet und mit dieser vorzugsweise drehfest verbunden. Die Verbindungswelle ist an der Unterseite der Arbeitsplatte gelagert und verläuft vorzugsweise von der Vorderseite zur Rückseite der Arbeitsplatte. Sie kann aber auch parallel zur Vorderseite oder in jede andere Richtung verlaufen. Vorzugsweise verlaufen mehrere Verbindungswellen parallel an der Unterseite der Arbeitsplatte. Die mindestens eine Verbindungswelle kann über eine Kette über Kettenräder welche jeweils an der Rückseite der Verbindungswellen angeordnet sein können, miteinander verbunden werden, sodass alle Verbindungswellen gleichmäßig rotiert werden können und ein gleichmäßiger Hub eines Rollenträgers gewährleistet ist. Anstelle einer Kette kann auch ein Zahnriemen oder eine Kardanwelle genutzt werden. Alternativ kann jede Verbindungswelle mit einem elektrischen, pneumatischen oder hydraulischen Antrieb ausgestattet sein.

Die Steuerscheibe ist so auf der jeweiligen Verbindungswelle angeordnet, dass ein Exzenter gebildet wird, durch welchen die Kugelrollen angehoben werden können. Die Steuerscheibe kann wiederum über ein Kugellager oder eine zusätzliche Rolle an dem in Höhenrichtung geführten Rollenträger gelagert sein. Der Rollenträger verläuft in einer bevorzugten Ausführungsform quer zu der mindestens einen Verbindungswelle, kann aber auch parallel mit der Verbindungswelle verlaufen. Der Rollenträger kann auch eine Platte sein. Auf dem Rollenträger sind mehrere Kugelrollen angeordnet, wobei jede Kugelrolle in einer Kugelkalotte gelagert ist. Die Rollen können auf dem Rollenträger auch über Stellschrauben einstellbar sein. Die mindestens eine Verbindungswelle kann über mindestens zwei Lagerbuchsen an der Unterseite der Arbeitsplatte drehbar gelagert sein. Die Steuerscheibe kann anstatt einer direkten Lagerung an dem Rollenträger zum Beispiel über ein Auflager, an dem ersten Ende einer Schubstange gelagert sein. Das zweite Ende der Schubstange kann an dem Rollenträger gelagert sein, sodass die rotatorische Bewegung der Steuerscheibe in eine Linearbewegung umgesetzt wird, wodurch der Rollenträger angehoben wird. Alternativ kann der Rollenträger über eine Lagerbuchse oder eine Rolle an der Steuerscheibe gelagert sein.

Durch die Exzentermechanik wird eine über den Handhebel oder ein Betätigungselement erzeugte rotatorische Bewegung der Verbindungswelle in eine translatorische Bewegung des Rollenträgers und letztendlich der Kugelrollen in Richtung der Arbeitsplatte oder von der Arbeitsplatte weg umgewandelt, sodass die Kugelrollen zwischen einer oberen und einer unteren Position verstellbar sind. Die kugelrollen könnten aber auch unmittelbar, d. h. ohne Rollenträger oder mittels eines anderen Bauteils auf der Steuerscheibe aufliegen.

Die Exzentereinheit ist bevorzugt eine auf einer Verbindungswelle angebrachte vorzugsweise runde Steuerscheibe. Der Rand der Steuerscheibe hat vorzugsweise einen ersten Punkt mit einem ersten Radius bezogen auf die Rotationsachse der Verbindungswelle und einen zweiten Punkt mit einem zweiten Radius bezogen auf die Rotationsachse der Verbindungswelle. Der erste Radius ist dabei ungleich dem zweiten Radius. Der Übergang von dem ersten Radius zu dem zweiten Radius ist vorzugsweise stetig ausgeführt, d. h. ohne Kanten. Vorzugsweise ist der Rand der Steuerscheibe die Fläche, mit welcher die Steuerscheibe an dem Rollenträger gelagert ist, beziehungsweise über ein Lager, oder über eine Schubstange an dem Rollenträger gelagert ist. Der Begriff "punkt" steht hier bevorzugt gleichbedeutend mit einer Position. Bei einer Steuerscheibe endlicher Dicke wäre der Punktbevorzugt eine Gerade auf der Aussenfläche der Steuerscheibe parallel zur Achse der Steuerscheibe.

Alternativ kann die Steuerscheibe oval, elliptisch oder auch dreieckig ausgeführt sein. Bevorzugt ist die Steuerscheibe kreisförmig, wobei die Rotationsachse außerhalb des Kreismittelpunktes liegt.

Je kleiner die Exzentrizität, d. h. der Unterschied zwischen dem ersten Radius und dem zweiten Radius, desto mehr Kraft kann durch die Exzentermechanik entwickelt werden. Je kleiner die Exzentrizität, desto geringer wird dafür der Hub der Kugelrollen. Der Zweck der Anordnung liegt in der Kraftverstärkung der über den Handhebel oder einen anderen Antrieb eingeleiteten Kraft. Dies führt dazu, dass über den Handhebel bzw. über einen anderen Antrieb mit geringem Kraftaufwand auch schwere Transportgüter auf der Arbeitsplatte angehoben und bewegt werden können.

Der Exzenter kann als Spannexzenter ausgeführt sein. Der Spannexzenter ist ein Spannelement mit geringen Herstellungskosten. Alle Größen sind nicht standardisiert, lassen sich aber ohne großen Aufwand schnell und einfach herstellen. Alternativ kann der Exzenter als Spannspirale ausgeführt sein. Nachteile des Spannexzenters sind die kleine Hubhöhe, der kleine Schwenkwinkel und die nicht konstante Spannkraft. Die Spannspirale hat nicht die Nachteile des Spannexzenters, allerdings sind die Herstellungskosten von Spannspiralen aufgrund des kostenintensiven Nachformfräsens ungleich höher.

Über die Größe der Exzentrizität können verschiedene Hubhöhen realisiert werden. Der Exzenter kann so ausgelegt sein, dass mit ihm eine Hubhöhe von 15mm, vorzugsweise 10mm und höchst vorzugsweise 3 mm realisierbar ist. Hierbei entspricht die Hubhöhe bevorzugt der Differenz zwischen dem ersten Radius und dem zweiten Radius.

Die Position des Handhebels zur Betätigung der Exzentermechanik bzw. die Form des Exzenters kann so gewählt werden, dass in der Exzentermechanik in der ausgefahrenen Position der Kugelrollen Selbsthemmung vorhanden ist. Dadurch wird keine Kraft zum Halten des Handhebels benötigt und ein selbstständiges absenken der Kugelrollen verhindert. Zusätzlich kann die Vorrichtung eine Verriegelung und/oder Arretierung aufweisen, die den Handhebel zusätzlich gegen ein unbeabsichtigtes umschwenken sichert, und wodurch der Handhebel in einer Endposition festgelegt werden kann. Ein selbsthemmender Exzenter ist bei der Verwendung eines elektrischen, pneumatischen oder hydraulischen Antriebs ebenfalls sinnvoll, da die Kugeln in einer ausgefahrenen Position, bei welcher die Kugeln aus der Oberfläche der Arbeitsplatte hervorstehen keine Halteleistung des Antriebsaggregats mehr benötigt wird. Dies führt dazu, dass kein unbeabsichtigtes Absenken eines auf der Arbeitsplatte befindlichen Werkstückes im Falle eines Stromausfalls oder eines geplatzten Luft- oder Hydraulikschlauches möglich ist.

Die Realisierung der dritten Position könnte auch durch ein Schrägstellen eines Rollenträgers oder durch einen zweiten Rollenträger bzw. eine zweite Exzentermechanik realisiert werden. Diese könnte an einer einzigen Steuerscheibe versetzt angreifen oder auch eine zweite Steuerscheibe haben.

Die Ausführung der Kugelrollen reicht von Leichtlastrollen aus Kunststoffrollen z.B. für den Transport von Glasscheiben, Metallplatten oder Transportkisten bis zu Schwerlastkugelrollen aus Metall für den Containertransport oder den Transport von schweren Werkstücken. Die Teilung der Rollen richtet sich jeweils nach der Fläche des zu befördernden Gutes.

Eine solche Arbeitsplatte erbringt neben der verbesserten Ergonomie auch eine Erhöhung der Produktivität. So ein System ist betriebssicherer, kostengünstiger und einfacher handzuhaben als bisherige Systeme.

Die Arbeitsplatte kann in einen ergonomisch einstellbaren Arbeitsplatz integriert sein. Dazu kann unter der Arbeitsplatte eine starre Unterkonstruktion oder eine Unterkonstruktion mit Höheneinstellfunktion angebracht sein. Die Höhenverstellung kann mittels zwei oder vier elektrischer Hubsäulen realisiert werden. Die Anzahl der Hubsäulen hängt von dem zu tragenden Hubgewichten ab. Der Verstellweg kann bei bis zu 410 mm liegen und kann stufenlos eingestellt werden. Eine Höheneinstellfunktion ermöglicht eine Variation zwischen stehen und sitzen am Arbeitsplatz. Dadurch kann der Arbeitsplatz multifunktional eingesetzt werden und kann beispielsweise auch als Besprechungstisch bei der Anwesenheit mehrerer Personen ohne die Verwendung von Stühlen genutzt werden.

In einer weiteren vorteilhaften Ausgestaltung hat die Arbeitsplatte einen Unterbau mit Rollen, sodass diese als Transportwagen eingesetzt werden kann.

Bevorzugt umfasst die Arbeitsplatte mindestens eine weitere, in der Höhe feststehende Kugelrolle. Diese wenigstens eine Kugelrolle kann auch eine andere Höhe haben, sodass ein Werkstück leicht schräg gelagert werden kann und sich damit selbstständig in Richtung der niedrigeren Rollen bewegen kann. Bevorzugt ist die wenigstens eine feststehende Rolle höher als die versenkbaren Rollen angeordnet, sodass sich das Werkstück zu den versenkbaren Rollen hinbewegen kann.

Auf, an oder integriert in die Arbeitsplatte kann ein Tischaufbau vorhanden sein. Der Tischaufbau kann ebenfalls als Ersatz der Standfüße dienen. Der Tischaufbau kann eine Hebevorrichtung aufweisen. Die Hebevorrichtung kann so ausgestaltet sein, dass sie über Gasdruckfedern oder über Seilzüge oder über einen elektrischen Verstellmechanismus stufenlos einstellbar ist. Die Hebevorrichtung kann so ausgestaltet sein, dass sich an ihr eine Tragschiene oder Halteschiene befindet, an die ebenfalls Transportbehälter angebracht werden können. Die Transportbehälter können auch als Greifschalen ausgeführt sein.

An dem Tischaufbau können Beleuchtungseinrichtungen angebracht werden. Vorzugsweise kommen hierbei LED-Leuchten zum Einsatz. Die LED-Beleuchtung kann aus einer Deckenleuchte sowie zwei rechts und links angebrachte, auf den Arbeitspunkt genau fokussierbare Zusatzleuchten aufgebaut sein. Hierdurch werden Schlagschatten verhindert und dem Auge ein helles und ermüdungsarmes Bild vermittelt. Die beiden fokussierbaren Seitenleuchten können von Personen bei Arbeitsbeginn selbst eingestellt werden. Alle drei LED-Leuchten können über einen Sensor angesteuert werden, sodass der Arbeitsplatz nur dann beleuchtet wird, wenn die dort beschäftigte Person dort tätig ist oder bei zusätzlich vorhandenem Tageslicht eine immer gleichbleibende Beleuchtungsstärke durch eine dynamische Regelung der LED-Beleuchtung ermöglicht wird. Dies bedeutet einerseits Stromeinsparungen und andererseits wird ein Aufheizen des Arbeitsplatzes, wie dies bei sonst üblichen Arbeitsleuchten der Fall ist, vermieden.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Fig. 1 zeigt eine Seitenansicht einer Arbeitsplatte mit einer Mehrzahl über einen Exzenter verstellbare Kugelrollen.
Fig. 2 zeigt eine Frontansicht einer Arbeitsplatte mit einer Mehrzahl über einen Exzenter verstellbarer Kugelrollen.
Fig. 3 zeigt eine Draufsicht einer Arbeitsplatte mit einer Mehrzahl über einen Exzenter verstellbare Kugelrollen.
Fig. 4 zeigt eine perspektivische Ansicht einer Arbeitsplatte mit einer Mehrzahl über einen Exzenter verstellbare Kugelrollen.
Fig. 5 zeigt einen Exzenter mit einer Steuerscheibe, wobei die Welle außerhalb des Mittelpunktes der Steuerscheibe angeordnet ist.
Fig. 6 zeigt einen Exzenter mit einer ovalen Steuerscheibe.
Fig. 7 zeigt eine perspektivische Ansicht eines Arbeitsplatzes mit einer Arbeitsplatte mit einer Mehrzahl über einen Exzenter verstellbare Kugelrollen.
Fig. 8 zeigt eine Seitenansicht eines Arbeitsplatzes mit einer Arbeitsplatte mit einer Mehrzahl über einen Exzenter verstellbare Kugelrollen.

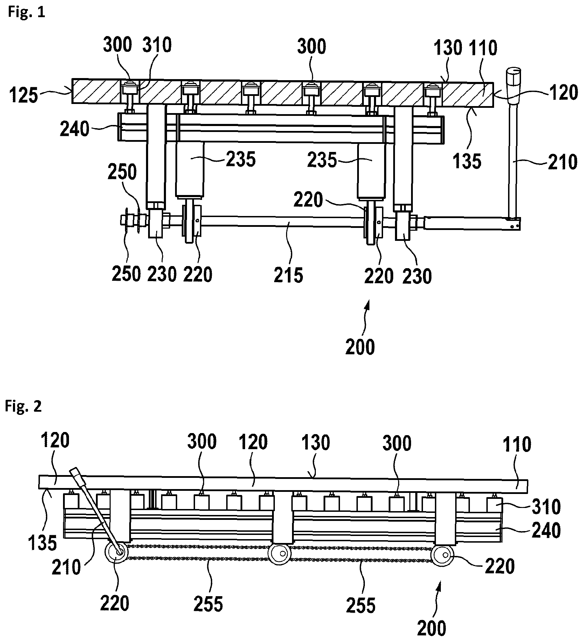

Figur 1 zeigt eine Arbeitsplatte 110 mit einer Mehrzahl über eine Exzentermechanik 200 verstellbarer Kugelrollen 300. Die Arbeitsplatte 110 hat eine Oberseite 130, auf welcher üblicherweise Werkstücke bearbeitet oder transportiert werden und eine Unterseite 135 gegenüber der Oberseite 110. Die Exzentermechanik 200 umfasst ein Betätigungselement hier in Form eines Handhebels 210. Der Handhebel 210 ist über eine Verbindungswelle 215 mit einer Steuerscheibe 220 verbunden. Die Steuerscheibe 220 ist so auf der Verbindungswelle 215 angeordnet, dass der Mittelpunkt der Steuerscheibe 221 außerhalb der Rotationsachse 216 der Verbindungswellenachse 215 liegt. An der Steuerscheibe 220 ist wiederum eine Schubstange 235 mit ihrem ersten freien Ende gelagert. Die Schubstange 235 ist mit ihrem zweiten freien Ende an einem in Höhenrichtung geführten Rollenträger 240 gelagert. Auf dem Rollenträger 240 sind mehrere Kugelrollen 300 angeordnet, wobei jede Kugelrolle 300 in einer Kugelkalotte 310 gelagert ist. Die Verbindungswelle 215 ist über mindestens zwei Lagerbuchsen 230 an der Unterseite 135 der Arbeitsplatte 110 drehbar gelagert. Die Verbindungswelle 215 verläuft von der Vorderseite 120 zur Rückseite 125 der Arbeitsplatte 110.

Durch die Exzentermechanik 200 wird eine über den Handhebel 210 erzeugte rotatorische Bewegung der Verbindungswelle 215 in eine translatorische Bewegung der Schubstangen 235 und somit des Rollenträgers 240 und letztendlich der Kugelrollen 300 in Richtung der Arbeitsplatte 110 oder von der Arbeitsplatte 110 weg umgewandelt.

Der Handhebel 210 ist bevorzugt auf der Vorderseite 120 oder seitlich an der Arbeitsplatte 110 angeordnet. Die Verbindungswelle 215 ist an der Unterseite 135 der Arbeitsplatte 110, vom Benutzer weg, von der Vorderseite 120 der Arbeitsplatte 210 in Richtung der Rückseite 125 der Arbeitsplatte 110 angeordnet. Die Arbeitsplatte 110 weist mehrere Verbindungswellen 215 auf, die vorzugsweise parallel zueinander angeordnet sind, wobei nur an einer Verbindungswelle 215 ein Handhebel 210 angeordnet ist. Die Verbindungswellen 215 haben jeweils mindestens ein Kettenrad 250, welches jeweils am hinteren Ende der Verbindungswelle 215 auf der Verbindungswelle 215, auf der Rückseite 125 der Arbeitsplatte 110 angeordnet ist. Die einzelnen Kettenräder 250 sind mittels einem Kettentrieb verbunden. Der Kettentrieb umfasst mindestens eine Kette 255 welche die Kettenräder 250 auf der Verbindungswellen 215 verbindet. Der Kettentrieb überträgt die Rotationsbewegung von der Verbindungswelle 215 mit dem Handhebel 210 an die Verbindungswellen 215 ohne Handhebel 210.

Figur 2 zeigt die Arbeitsplatte 110 mit der Exzentermechanik 200 und den versenkbaren Kugelrollen 300 aus einer Frontansicht. Die Verbindungswellen 215 sind über eine Kette 255 über Kettenräder 250 miteinander verbunden, sodass die Verbindungswellen 215 synchron rotieren und ein gleichmäßiger Hub des Rollenträgers 240 gewährleistet ist.

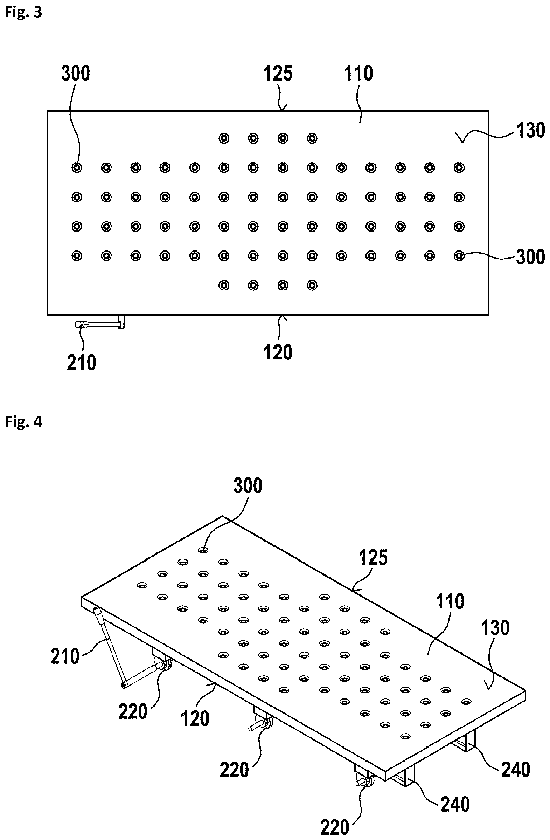

Figur 3 zeigt eine Draufsicht auf die Oberseite 130 der Arbeitsplatte 110. Die Kugelrollen 300 sind durch die Löcher in der Oberseite 130 in der Arbeitsplatte 110 erkennbar. Der Handhebel 210 befindet sich im Greifbereich eines Nutzers, sodass ein ergonomisches umschalten, d. h. ohne dass der Benutzer aufsteht, zwischen den verschiedenen Positionen der Kugelrollen 300 ermöglicht wird.

Figur 4 zeigt eine Schrägansicht der Arbeitsplatte 110 mit der darunter angeordneten Exzentermechanik 200. Die Kugelrollen 300 befinden sich in einem eingefahrenen Zustand, sodass die Kugelrollen 300 nicht über die Oberfläche der Arbeitsplatte 110 hinausragen.

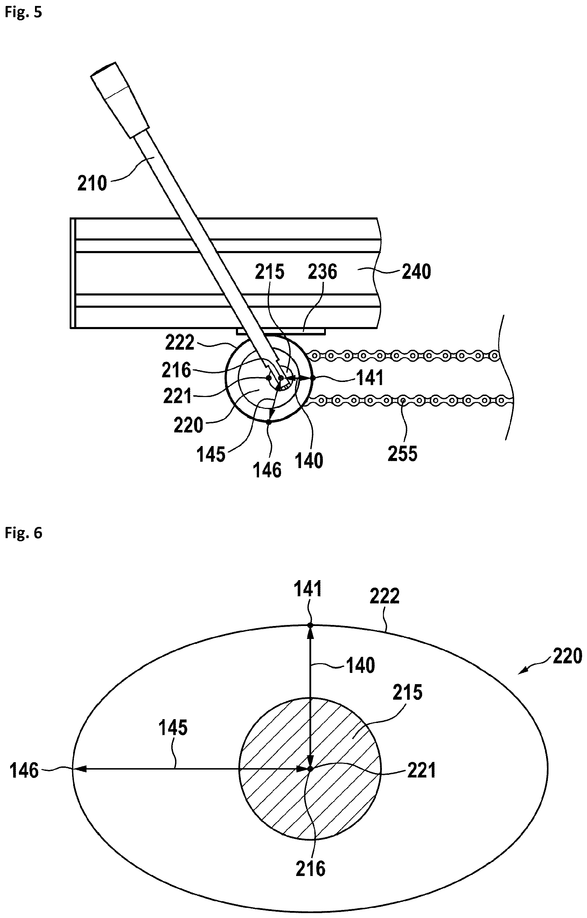

Figur 5 zeigt einen Exzenter mit einer runden Steuerscheibe 220. Der Mittelpunkt 221 der Steuerscheibe 220 liegt außerhalb der Rotationsachse der Verbindungswelle 216 der Verbindungswelle 215. Durch die Rotation der Verbindungswelle 215 rotiert die Steuerscheibe 220 somit um die Rotationsachse 216 der Verbindungswelle 215 und nicht um Mittelpunkt 221 der Steuerscheibe 220. Auf dem Rand der Steuerscheibe 222 ist vorzugsweise ein erster Punkt 141 angeordnet. Zwischen dem ersten Punkt 141 und der Rotationsachse 216 der Verbindungswelle 215 gibt einen ersten Radius 140. Zusätzlich ist auf dem Rand der Steuerscheibe 222 ein zweiter Punkt 146 angeordnet, mit einem zweiten Radius 145 bezogen auf den Mittelpunkt der Rotationsachse 216 der Verbindungswelle 215. Der erste Radius 140 ist dabei ungleich dem zweiten Radius 145. Der Rollenträger 240 ist über ein Auflager 236 an der Steuerscheibe 220 gelagert.

Figur 6 zeigt eine Exzentereinheit mit einer ovalen Steuerscheibe 220. Die Exzentereinheit ist eine auf einer Verbindungswelle 215 angeordnete Steuerscheibe 220. Auf dem Rand der Steuerscheibe 222 ist vorzugsweise ein erster Punkt 141 angeordnet. Zwischen dem ersten Punkt 141 und dem Mittelpunkt der Rotationsachse 216 der Verbindungswelle 215 gibt einen ersten Radius 140. Zusätzlich ist auf dem Rand der Steuerscheibe 222 ein zweiter Punkt 146 angeordnet, mit einem zweiten Radius 145 bezogen auf den Mittelpunkt der Rotationsachse 216 der Verbindungswelle 220. Der erste Radius 140 ist dabei ungleich dem zweiten Radius 145.

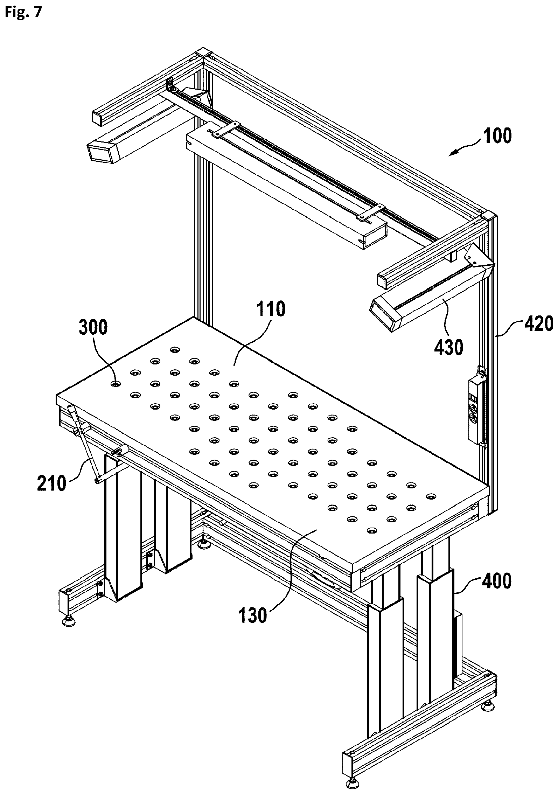

Figur 7 einen ergonomisch einstellbaren Arbeitsplatz mit einer Arbeitsplatte 110 nach einer der vorstehenden Figuren. Der Arbeitsplatz ist in einer kompletten Ausbaustufe mit einer höhenverstellbaren Tischunterkonstruktion 400 einem höhenverstellbaren Tischaufbau 420 sowie vorhandener Montagebeleuchtungsweinrichtung 430 dargestellt. An dem Tischaufbau 420 können mehrere Montagebeleuchtungseinrichtungen 430 zur Ausleuchtung des Arbeitsplatzes 100 angeordnet sein. Die Anordnung ist bevorzugt so, dass Schlagschatten vermieden werden. Der Arbeitsplatz 100 weist bevorzugt eine Tischunterkonstruktion 400 auf, die höhenverstellbar ausgeführt ist. Bevorzugt ist mindestens noch ein Anschlag und/oder eine Arretierung für den Handhebel vorhanden. Mit der mindestens einen Arretierung ist mindestens eine Stellung bzw. Endstellung des Handhebels festlegbar.

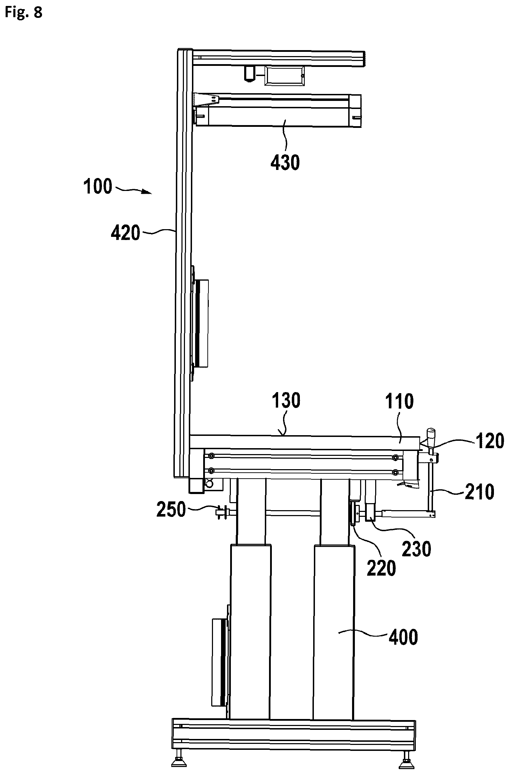

Figur 8 zeigt einen ergonomisch einstellbaren Arbeitsplatz mit einer Arbeitsplatte 110 nach einer der vorstehenden Figuren aus einer Seitenansicht.

### Bezugszeichenliste

- 100: Ergonomisch einstellbarer Arbeitsplatz
- 110: Arbeitsplatte
- 120: Vorderseite
- 125: Rückseite
- 130: Oberseite
- 135: Unterseite
- 140: Erster Radius
- 141: Erster Punkt
- 145: Zweiter Radius
- 146: Zweiter Punkt
- 200: Exzentermechanik
- 210: Handhebel
- 215: Verbindungswelle
- 216: Rotationsachse der Verbindungswelle
- 220: Steuerscheibe
- 221: Mittelpunkt der Steuerscheibe
- 222: Rand der Steuerscheibe
- 230: Lagerbuchse
- 235: Schubstange
- 236: Auflager
- 240: Rollenträger
- 250: Kettenrad
- 255: Kette
- 300: Kugelrolle
- 310: Kugelkalotte
- 400: Tischunterkonstruktion
- 420: Tischaufbau
- 430: Montagebeleuchtung

## Patentansprüche

1. Arbeitsplatte (110) mit einer Mehrzahl in die Arbeitsplatte (110) eingelassener und versenkbar angeordneter Kugelrollen (300),
**dadurch gekennzeichnet, dass**
die Kugelrollen (300) über eine Exzentermechanik (200) in der Arbeitsplatte (110) versenkbar sind, wobei die Exzentermechanik eine Verbindungswelle und eine Steuerscheibe umfasst.

2. Arbeitsplatte (110) nach Anspruch 1,
**dadurch gekennzeichnet, dass**
die Exzentermechanik (200) eine Steuerscheibe (220) und eine Verbindungswelle (215) umfasst wobei die Verbindungswelle (215) über mindestens zwei Lagerbuchsen (230) an der Unterseite (135) der Arbeitsplatte (110) drehbar gelagert ist und die die Steuerscheibe (220) vorzugsweise auf der Verbindungswelle (215) angeordnet ist.

3. Arbeitsplatte (110) nach mindestens einem der vorhergehenden Ansprüche,
**dadurch gekennzeichnet, dass**
die Exzentermechanik (200) einen Rollenträger (240) umfasst und/oder an der Unterseite der Arbeitsplatte (110) angeordnet ist.

4. Arbeitsplatte (110) nach Anspruch 1 und 3,
**dadurch gekennzeichnet, dass**
der Rollenträger (240) unmittelbar, über eine Schubstange (235), über eine Lagerbuchse (230) oder eine Rolle an der Steuerscheibe (220) gelagert ist.

5. Arbeitsplatte (110) nach mindestens einem der vorhergehenden Ansprüche,
**dadurch gekennzeichnet, dass**
ein Handhebel (210) zur Betätigung der Exzentermechanik (200) vorgesehen ist.

6. Arbeitsplatte (110) nach mindestens einem der vorhergehenden Ansprüche,
**dadurch gekennzeichnet, dass**
in der Exzentermechanik (200) in einer ausgefahrenen Position der Kugelrollen (300) Selbsthemmung vorhanden ist.

7. Arbeitsplatte (110) nach mindestens einem der vorhergehenden Ansprüche 2-6,
**dadurch gekennzeichnet, dass**
die Steuerscheibe (220) auf der Verbindungswelle (215) angeordnet ist und die Steuerscheibe einen Rand (222) mit einem ersten Punkt (141) mit einem ersten Radius (140) bezogen auf die Rotationsachse der Verbindungswelle (216) und einen zweiten Punkt (146) mit einem zweiten Radius (145) bezogen auf die Rotationsachse der Verbindungswelle (216) hat, wobei der erste Radius (140) ungleich dem zweiten Radius (145) ist.

8. Arbeitsplatte (110) nach mindestens einem der vorhergehenden Ansprüche,
**dadurch gekennzeichnet, dass**
die Arbeitsplatte einen Unterbau mit Rollen aufweist.

9. Arbeitsplatte (110) nach mindestens einem der vorhergehenden Ansprüche,
**dadurch gekennzeichnet, dass**
die Arbeitsplatte mindestens eine weitere, in der Höhe feststehende Kugelrolle (300) umfasst.

10. Ergonomisch einstellbarer Arbeitsplatz (100),
**dadurch gekennzeichnet,**
**dass** der ergonomisch einstellbare Arbeitsplatz (100) eine Arbeitsplatte (110) nach einem der vorhergehenden Ansprüche aufweist.

11. Ergonomisch einstellbarer Arbeitsplatz (100) nach Anspruch 10,
**dadurch gekennzeichnet, dass**
der Arbeitsplatz (100) eine höhenverstellbare Tischunterkonstruktion (400) und/oder einen Tischaufbau (420) aufweist.

12. Ergonomisch einstellbarer Arbeitsplatz (110) nach Anspruch 10 oder 11,
**dadurch gekennzeichnet, dass**
der Arbeitsplatz (100) einen Tischaufbau (420) aufweist.

13. Ergonomisch einstellbarer Arbeitsplatz (110) nach Anspruch 12,
**dadurch gekennzeichnet, dass**
der Tischaufbau (420) eine Hebevorrichtung und/oder mindestens eine Montagebeleuchtung (430) umfasst.

## Claims

1. Worktop (110) with a plurality of ball rollers (300) which are embedded into the worktop and are arranged such that they can be lowered into the worktop (110),
**characterized in that**
the ball rollers (300) can be lowered into the worktop (110) via an eccentric mechanism (200), wherein the eccentric mechanism comprises a connecting shaft and a control disk.

2. Worktop (110) according to claim 1,
**characterized in that**
the eccentric mechanism (200) comprises a control disk (220) and a connecting shaft (215), wherein the connecting shaft (215) is rotatably mounted via at least two bearing bushes (230) at the underside (135) of the worktop (110) and the control disk (220) is preferably arranged on the connecting shaft (215).

3. Worktop (110) according to at least one of the preceding claims,
**characterized in that**
the eccentric mechanism (200) comprises a roller carrier (240) and/or is arranged at the underside of the worktop (110).

4. Worktop (110) according to claim 1 and 3,
**characterized in that**
the roller carrier (240) is mounted directly, via a push rod (235), via a bearing bush (230) or a roller at the control disk (220).

5. Worktop (110) according to at least one of the preceding claims,
**characterized in that**
a hand lever (210) is provided for actuating the eccentric mechanism (200).

6. Worktop (110) according to at least one of the preceding claims,
**characterized in that**
self-locking is present in the eccentric mechanism (200) in an extended position of the ball rollers (300).

7. Worktop (110) according to at least one of the preceding claims 2 - 6,
**characterized in that**
the control disk (220) is arranged on the connecting shaft (215) and the control disk has an edge (222) with a first point (141) with a first radius (140) with respect to the axis of rotation of the connecting shaft (216) and a second point (146) with a second radius (145) with respect to the axis of rotation of the connecting shaft (216), the first radius (140) being unequal to the second radius (145).

8. Worktop (110) according to at least one of the preceding claims,
**characterized in that**
the worktop has a substructure with rollers.

9. Worktop (110) according to at least one of the preceding claims,
**characterized in that**
the worktop comprises at least one further ball roller (300) which is fixed in height.

10. Ergonomically adjustable work station (100),
**characterized in that**
the ergonomically adjustable work station (100) has a worktop (110) according to one of the preceding claims.

11. Ergonomically adjustable work station (100) according to claim 10,
**characterized in that**
the work station (100) has a height-adjustable table substructure (400) and/or a table structure (420).

12. Ergonomically adjustable work station (100) according to claim 10 or 11,
**characterized in that**
the work station (100) has a table structure (420).

13. Ergonomically adjustable work station (100) according to claim 12,
**characterized in that**
the table structure (420) comprises a lifting device and/or at least one assembly lighting (430).

## Revendications

1. Plan de travail (110) comportant une pluralité de billes de roulement (300) encastrées et disposées de manière escamotable dans le plan de travail (110),
**caractérisé en ce que** les billes de roulement (300) peuvent être escamotées dans le plan de travail (110) par un mécanisme à excentrique (200), le mécanisme à excentrique comprenant un arbre de liaison et une came de commande.

2. Plan de travail (110) selon la revendication 1,
**caractérisé en ce que**
le mécanisme à excentrique (200) comprend une came de commande (220) et un arbre de liaison (215), l'arbre de liaison (215) étant monté tournant sur la face inférieure (135) du plan de travail (110) au moyen d'au moins deux coussinets (230) et la came de commande (220) étant de préférence disposée sur l'arbre de liaison (215).

3. Plan de travail (110) selon au moins l'une des revendications précédentes,
**caractérisé en ce que** le mécanisme à excentrique (200) comprend un support de rouleaux (240) et/ou est disposé sur la face inférieure du plan de travail (110).

4. Plan de travail (110) selon les revendications 1 et 3,
**caractérisé en ce que**
le support de rouleaux (240) est monté directement, par l'intermédiaire d'une tige de poussée (235), par l'intermédiaire d'un coussinet (230) ou d'un rouleau sur la came de commande (220) .

5. Plan de travail (110) selon au moins l'une des revendications précédentes,
**caractérisé en ce**
**qu'**un levier à main (210) est prévu pour actionner le mécanisme à excentrique (200).

6. Plan de travail (110) selon au moins l'une des revendications précédentes,
**caractérisé en ce**
**qu'**un autoblocage est prévu dans le mécanisme à excentrique (200) dans une position sortie des billes de roulement (300).

7. Plan de travail (110) selon au moins l'une des revendications 2 à 6 précédentes,
**caractérisé en ce que**
la came de commande (220) est disposée sur l'arbre de liaison (215) et la came de commande présente un bord (222) avec un premier point (141) ayant un premier rayon (140) par rapport à l'axe de rotation de l'arbre de liaison (216) et un deuxième point (146) ayant un deuxième rayon (145) par rapport à l'axe de rotation de l'arbre de liaison (216), le premier rayon (140) étant différent du deuxième rayon (145).

8. Plan de travail (110) selon au moins l'une des revendications précédentes,
**caractérisé en ce que**
le plan de travail présente un soubassement muni de roulettes.

9. Plan de travail (110) selon au moins l'une des revendications précédentes,
**caractérisé en ce que**
le plan de travail comprend au moins une autre bille de roulement (300) qui est fixe en hauteur.

10. Poste de travail réglable ergonomiquement (100),
**caractérisé en ce que**
le poste de travail réglable ergonomiquement (100) présente un plan de travail (110) selon l'une des revendications précédentes.

11. Poste de travail réglable ergonomiquement (100) selon la revendication 10,
**caractérisé en ce que**
le poste de travail (100) présente une structure inférieure de table réglable en hauteur (400) et/ou une structure supérieure de table (420).

12. Poste de travail réglable ergonomiquement (110) selon la revendication 10 ou 11,
**caractérisé en ce que**
le poste de travail (100) présente une structure supérieure de table (420).

13. Poste de travail réglable ergonomiquement (110) selon la revendication 12,
**caractérisé en ce que**
la structure supérieure de table (420) comprend un dispositif de levage et/ou au moins un éclairage de montage (430).
